# EUROPEAN PATENT APPLICATION

(11) **EP 4 597 698 A1**
(43) Date of publication of application: **06.08.2025**
(21) Application number: 23872461.1
(22) Date of filing: 27.09.2023
(51) Int. Cl.: H01M 50/184, H01M 50/107, H01M 50/152, H01M 50/167, H01M 50/186

(54) **POWER STORAGE DEVICE**

(30) Priority: 30.09.2022 JP 2022158854
(71) Applicant: Panasonic Intellectual Property Management Co., Ltd., Kadoma-shi, Osaka 571-0057 (JP)
(72) Inventor: KATO, Yudai, Kadoma-Shi, Osaka 571-0057 (JP); GESHI, Shinya, Kadoma-Shi, Osaka 571-0057 (JP)
(74) Representative: Eisenführ Speiser
(86) International application number: PCT/JP2023/035256
(87) International publication number: WO 2024/071239

(57) **Abstract**

A battery includes an outer case including a tubular part with a tubular shape, a bottom part closing one end of the tubular part, and an opening disposed at the other end of the tubular part; an electrode assembly disposed inside the outer case and including a positive electrode and a negative electrode; a sealing body sealing the opening of the outer case; and a gasket with insulating properties interposed between the outer case and the sealing body. The gasket includes a first gasket with a circular shape, and a second gasket with a circular shape located closer to the bottom part than the first gasket is in the axial direction.

## Description

### TECHNICAL FIELD

The present disclosure relates to a power storage device.

### BACKGROUND ART

A cylindrical battery disclosed in Patent Literature 1 has conventionally known as an example of the power storage device. The cylindrical battery includes an outer case having a bottomed-tubular shape, an electrode assembly disposed inside the outer case, a sealing body closing an opening of the outer case, and a gasket sandwiched between the outer case and the sealing body, with the gasket insulating the sealing body from the outer case. The outer case includes a crimping part, a groove part, a tubular part, and a bottom part. The groove part is formed by circularly recessing a portion of the side surface of the outer case toward the inner side in a radial direction. The crimping part is formed, when fixing the sealing body to the outer case, by bending an upper end portion of the outer case inward toward a peripheral edge portion of the sealing body, with an upper end portion with a cylindrical shape of the gasket being also bent inward in the radial direction.

### Citation List

### Patent Literature

PTL 1: Japanese Patent Unexamined Publication No. 2021-150243

### SUMMARY OF THE INVENTION

The length in the radial direction of a crimping part is preferably increased because it improves airtightness of a cylindrical battery. Unfortunately, the increased length in the radial direction of the crimping part, increases the dimension in the axial direction of the bent part of a gasket. This, in turn, increases the difference in circumferential length near the tip portion of the bent part between before and after the bending thereof, which may cause undulations at the inner peripheral edge of the bent part of the gasket. Therefore, it is necessary to provide a power storage device with improved reliability.

In order to solve the above problem, a power storage device according to the present disclosure includes an outer case including a tubular part, with a tubular shape including one end and the other end, a bottom part closing one end of the tubular part, and an opening disposed at the other end of the tubular part; an electrode assembly disposed inside the outer case and including a positive electrode, and a negative electrode; a sealing body sealing the opening of the outer case; and a gasket with an insulating property disposed between the outer case and the sealing body. The gasket includes a first gasket with a circular shape, and a second gasket with a circular shape located closer to the bottom part than the first gasket is in an axial direction.

The power storage device according to the present disclosure has improved reliability.

### BRIEF DESCRIPTION OF DRAWINGS

FIG. 1 is a cross-sectional view in the axial direction of a cylindrical battery serving as a power storage device according to an embodiment of the present disclosure.
FIG. 2 is a perspective diagram illustrating an electrode assembly and a part of positive-electrode leads.
FIG. 3 is a perspective diagram illustrating an upper portion of a cylindrical battery, while being cut in a plane including the center axis.
FIG. 4 is a half cross-sectional view in the axial direction of the upper portion of the cylindrical battery.
FIG. 5 is a perspective diagram illustrating a first gasket while being cut in a plane including the center axis.
FIG. 6 is an enlarged cross-sectional view of around mating surfaces, shown in FIG. 4, of the first gasket and a second gasket.
FIG. 7 is a cross-sectional view in the axial direction of a portion of a cylindrical battery according to a reference example which differs from the cylindrical battery according to the present embodiment in that a gasket is configured as only a single, integrated part.
FIG. 8 is a cross-sectional view in the axial direction of a portion of a cylindrical battery for explaining a problem of the cylindrical battery according to the reference example.
FIG. 9 is an enlarged cross-sectional view of a cylindrical battery according to a first modified example, with the view corresponding to that of FIG. 6.
FIG. 10 is an enlarged cross-sectional view of a cylindrical battery according to a second modified example, with the view corresponding to that of FIG. 6.
FIG. 11 is a half cross-sectional view in the axial direction of a cylindrical battery according to a third modified example, with the view corresponding to that of FIG. 4.
FIG. 12 is a perspective diagram illustrating a first gasket of the cylindrical battery according to the third modified example, with the diagram corresponding to that of FIG. 5.

### DESCRIPTION OF EMBODIMENTS

Embodiments of a power storage device according to the present disclosure will now be described in detail with reference to the accompanying drawings. Note that the power storage device according to the present disclosure is not limited to the batteries described below. The power storage device according to the present disclosure may be a primary battery or a secondary battery. Further, the power storage device may be a battery using an aqueous electrolyte or a battery using a non-aqueous electrolyte. Alternatively, the power storage device according to the present disclosure may also be a capacitor (condenser) instead of a battery. In the following description, a non-aqueous electrolyte secondary battery (lithium ion battery) which uses a non-aqueous electrolyte will be exemplified as a power storage device according to an embodiment, but the power storage device according to the present disclosure is not limited to such a battery.

In the following descriptions in which a plurality of embodiments and alternative configurations are included, a new embodiment constructed by combining characteristic portions of these embodiments and alternative configurations are presumed from the start. In addition, in the following embodiments, the same structures in the drawings are assigned the same reference numerals, and repeated descriptions thereof are omitted. Further, the plurality of drawings includes schematic drawings and dimension ratios such as a horizontal size, a lateral size, a height, and the like among various members do not necessarily coincide with each other throughout different drawings. Moreover, in this specification, the sealing body 17 side of battery 10 in the axial direction (height direction) is referred to as the "upper" side, and the bottom part 68 side of outer case 16 in the axial direction is referred to as the "lower" side. Moreover, among the constituting elements described below, constituting elements that are not described in an independent claim describing the broadest concept are optional constituting elements, and are not essential constituting elements.

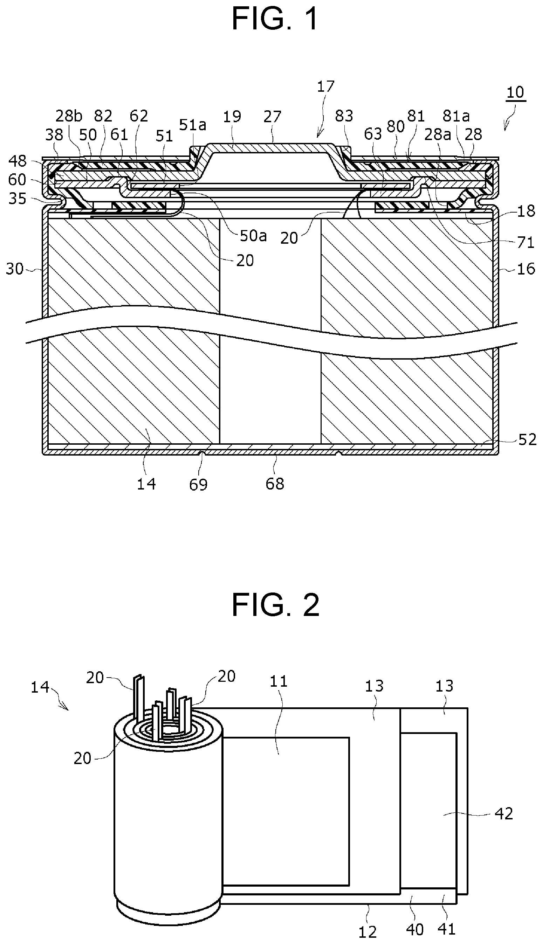

FIG. 1 is a cross-sectional view in the axial direction of battery 10 serving as a power storage device according to an embodiment of the present disclosure. As shown in FIG. 1, battery 10 includes wound electrode assembly 14, non-aqueous electrolyte (not shown), bottomed-tubular outer case 16 accommodating both electrode assembly 14 and the non-aqueous electrolyte, and sealing body 17 closing an opening of outer case 16.

The non-aqueous electrolyte includes a non-aqueous solvent and an electrolyte salt dissolved in the non-aqueous solvent. The non-aqueous solvent may be, for example, an ester, an ether, a nitrile, an amide, a mixed solvent of two or more of these solvents, or the like. The non-aqueous solvent may contain a halogen-substituted product in which at least one of hydrogen atoms of a corresponding one of these solvents is substituted with a halogen atom such as fluorine. Note that the non-aqueous electrolyte is not limited to a liquid electrolyte, and may be a solid electrolyte that uses a gel polymer or the like. The electrolyte salt used herein is a lithium salt such as LiPF.

FIG. 2 is a perspective diagram illustrating electrode assembly 14 and a part of positive-electrode leads 20. In FIG. 2, wound electrode assembly 14 is illustrated while the positive electrode 11, negative electrode 12, and separators 13 on the winding-end side of the electrode assembly are developed. As shown in FIG. 2, electrode assembly 14 includes elongated positive electrode 11, elongated negative electrode 12, and two sheets of elongated separators 13. Electrode assembly 14 has a wound structure in which positive electrode 11 and negative electrode 12 are wound together via separators 13 individually interposed therebetween. A plurality of positive-electrode leads 20 is joined and electrically coupled to positive electrode 11, with positive-electrode leads 20 being spaced from each other in the longitudinal direction of positive electrode 11. For example, as shown in FIG. 2, eight positive-electrode leads 20 are joined to positive electrode 11 in a state of being arranged at intervals in the longitudinal direction of positive electrode 11.

Negative electrode 12 is formed in a slightly larger size than positive electrode 11 in order to prevent precipitation of lithium. That is, negative electrode 12 is formed in a longer shape than positive electrode 11 in both the longitudinal and the width direction (short-side direction). Further, the two sheets of separators 13 are formed in a slightly larger size than positive electrode 11, and are disposed so as to sandwich positive electrode 11 therebetween. Separators 13 protrude upward beyond both positive electrode 11 and negative electrode 12. One end in the width direction of negative electrode 12 protrudes downward beyond both positive electrode 11 and separators 13.

In negative electrode 12, negative-electrode current-collector exposed part 41 on which negative-electrode material-mixture layer 42 is not disposed, is formed at one end in the width direction of negative-electrode current collector 40. Negative-electrode current-collector exposed part 41 is formed at a lower end portion in the axial direction of elongated negative electrode 12, extending from the end on the winding-start to the end on the winding-end in the longitudinal direction of elongated negative electrode 12. Therefore, the lower end portion in the axial direction of electrode assembly 14 is constituted by negative-electrode current-collector exposed part 41. Negative electrode 12 may constitute the winding-start end of electrode assembly 14. However, in general, separator 13 extends beyond the end on the winding-start of negative electrode 12, and thus an end on the winding-start of separator 13 constitutes the winding-start end of electrode assembly 14.

Positive electrode 11 includes an elongated positive-electrode current collector and positive-electrode material-mixture layers that are formed on both surfaces of the positive-electrode current collector. Material used for the positive-electrode current collector may include a metal foil made of such as aluminum or an aluminum alloy which is stable over the potential range of positive electrode 11, and a film on a surface of which one of these metals is disposed. Further, the positive-electrode material-mixture layer includes a positive-electrode active material, an electrically conductive agent, and a binder. Positive electrode 11 is prepared, for example, as follows: A slurry of a positive-electrode material mixture is applied on a positive-electrode current collector, with the slurry including the positive-electrode active material, the electrically conductive agent, the binder, etc. Then the thus-applied coatings are dried, followed by compressing them to forming positive-electrode material-mixture layers on both surfaces of the positive-electrode current collector.

The positive-electrode active material is composed mainly of a lithium-containing metal composite oxide. Examples of metal elements contained in the lithium-containing metal composite oxide include Ni, Co, Mn, Al, B, Mg, Ti, V, Cr, Fe, Cu, Zn, Ga, Sr, Zr, Nb, In, Sn, Ta, and W. An example of a preferable lithium-containing metal composite oxide is a composite oxide containing at least one of Ni, Co, Mn, and Al.

Examples of the electrically conductive agent included in the positive-electrode material-mixture layer may include a carbon material such as carbon black, acetylene black, Ketjen black, and graphite. Examples of the binder included in the positive-electrode material-mixture layer may include a fluorocarbon resin such as polytetrafluoroethylene (PTFE) and polyvinylidene fluoride (PVdF), polyacrylonitrile (PAN), a polyimide resin, an acrylic resin, and a polyolefin resin. These resins may be used in combination with cellulose derivatives such as carboxymethyl cellulose (CMC) or a salt thereof, a polyethylene oxide (PEO), and the like.

Positive electrode 11 includes positive-electrode current-collector exposed parts that are disposed and arranged in the longitudinal direction of positive electrode 11 and are equal in number to positive-electrode leads 20. Positive-electrode leads 20 are joined to the respective positive-electrode current-collector exposed parts. A plurality of positive-electrode leads 20 is joined to these exposed portions, being aligned with spacings therebetween in the longitudinal direction of the band-like positive-electrode current collector, and preferably aligned at substantially regular intervals in the longitudinal direction. This results in shortened current paths in the longitudinal direction of positive electrode 11 and a reduced internal resistance of battery 10. Positive-electrode leads 20 may be each covered with an insulating tape (not shown), for example, resulting in a reduction in occurrence of short circuits between positive electrode 11 and negative electrode 12. Such an insulating tape may cover all of the positive-electrode current-collector exposed parts.

As shown in FIG. 2, negative electrode 12 includes elongated negative-electrode current collector 40, and negative-electrode material-mixture layers 42 that are formed on both surfaces of negative-electrode current collector 40. Material used for negative-electrode current collector 40 may include a metal foil made of copper or a copper alloy which is stable over the potential range of negative electrode 12, and a film on a surface of which one of these metals is disposed. Negative-electrode material-mixture layers 42 include a negative-electrode active material, and a binder. Negative electrode 12 is prepared, for example, as follows: A slurry of a negative-electrode material mixture is applied on negative-electrode current collector 40, with the slurry including the negative-electrode active material, the binder, etc. Then the thus-applied coatings are dried, followed by compressing them to forming negative-electrode material-mixture layers 42 on both surfaces of negative-electrode current collector 40.

For the negative-electrode active material, a carbon material capable of reversibly occluding and releasing lithium ions is generally used. The carbon material is graphite, for example, that includes natural graphite such as flaky graphite, massive graphite, and earthy graphite, and artificial graphite such as massive artificial graphite and graphitized mesophase carbon microbeads. In negative-electrode material-mixture layers 42, the negative-electrode active material may include a Si material containing silicon (Si), other than the carbon material. Moreover, in the negative-electrode active material, there may also be included, other than Si, a metal capable of being alloyed with lithium, an alloy containing such a metal, and a compound containing such a metal.

For the binder included in negative-electrode material-mixture layers 42, as in the case of positive electrode 11, there may be used a fluorocarbon resin, PAN, a polyimide resin, an acrylic resin, a polyolefin resin, and the like. Alternatively, there may also be used a styrene-butadiene rubber (SBR) or a modified product thereof. The negative-electrode material-mixture layers may include CMC or a salt thereof, polyacrylic acid (PAA) or a salt thereof, polyvinyl alcohol, and the like, in addition to e.g. SBR.

Each of separators 13 has an elongated shape. Separator 13 employs a porous sheet with ion permeability and insulating properties. Specific examples of the porous sheet include a microporous thin film, a fabric, and a non-woven fabric. Examples of the material of separator 13 include a polyolefin resin such as polyethylene or polypropylene, or cellulose. Separator 13 may have either a monolayer structure or a laminated structure. On a surface of separator 13, a heat-resistant layer and the like may be disposed.

As shown in FIG. 1, battery 10 includes annular insulating plate 18 on the upper side of electrode assembly 14. Positive-electrode leads 20 attached to positive electrode 11 extend through a through hole in insulating plate 18 toward the sealing body 17 side. Sealing body 17 includes first current-collector plate 50 and terminal cap 27. First current-collector plate 50 is a metal annular plate member and is provided with insertion hole 50a at a center portion thereof in a radial direction.

Terminal cap 27 is a metal plate-like member, and is located on the upper side in the axial direction of sealing body 17. The end surface on the upper side in the axial direction of terminal cap 27, except the outer edge portion thereof, is exposed to the outside. Of such an exposed portion of terminal cap 27, a center portion in the radial direction serves as terminal part 19 that protrudes to the outside in the axial direction. Terminal part 19 constitutes a positive-electrode terminal. Sealing body 17 further includes auxiliary current-collector plate 51. Auxiliary current-collector plate 51 is a metal annular plate member. Auxiliary current-collector plate 51 is provided with through hole 51a constituted by a cylindrical hole.

Each of Positive-electrode leads 20 is bent to extend, from positive electrode 11, through insertion hole 50a of first current-collector plate 50, and then along the upper surface of first current-collector plate 50. The tip portion of each positive-electrode lead 20 is in a state of being sandwiched between the upper surface of first current-collector plate 50 and the lower surface of auxiliary current-collector plate 51. Each positive-electrode lead 20 is joined to the upper surface of first current-collector plate 50. First current-collector plate 50 is also joined to auxiliary current-collector plate 51. Each positive-electrode lead 20 is also joined to auxiliary current-collector plate 51. The joining of them can be achieved by laser welding as follows: For example, while the tip portion of each positive-electrode lead 20 is sandwiched between first current-collector plate 50 and auxiliary current-collector plate 51, laser light is applied to irradiate auxiliary current-collector plate 51, i.e., a surface (rear surface) thereof which is opposite to a surface thereof facing first current-collector plate 50 in the thickness direction. Since the laser welding is carried out in the state of the tip portion of positive-electrode lead 20 being sandwiched between first current-collector plate 50 and auxiliary current-collector plate 51, it allows positive-electrode lead 20 to be joined more reliably and more easily to first current-collector plate 50. The power storage device according to the present disclosure does not necessarily need to use any auxiliary current-collector plate. Further, positive-electrode lead 20 may be directly connected to terminal cap 27 without using first current-collector plate 50. When without using first current-collector plate 50, terminal cap 27 alone may function as sealing body 17 interposed between crimping part 38 and groove part 35. Moreover, when using first current-collector plate 50, first current-collector plate 50 alone may function as sealing body 17 interposed between crimping part 38 and groove part 35, and the outer peripheral edge portion of terminal cap 27 may not be located between crimping part 38 and groove part 35.

First current-collector plate 50 includes annular outer peripheral portion 60, circular protrusion 61, and annular inner peripheral portion 63. Annular outer peripheral portion 60 is located on the outer side in the radial direction of the first current-collector plate 50, and extends toward the radial direction. Circular protrusion 61 is connected to the end portion on the inner side in the radial direction of outer peripheral portion 60, and protrudes from the thus-connected end portion toward the upper side in the axal direction. Annular inner peripheral portion 63 is connected to circular protrusion 61 via circular step part 62 that extends downward from circular protrusion 61, and extends from step part 62 toward the inner side in the radial direction of the first current-collector plate 50. Moreover, terminal cap 27 includes circular recess 71 that accommodates at least the tip portion side of circular protrusion 61.

Battery 10 includes metal second current-collector plate 52 on the lower side in the axial direction of electrode assembly 14. As referring to FIGS. 1 and 2, negative-electrode current-collector exposed part 41 is joined, by laser welding, to the upper surface of second current-collector plate 52 over a wide region in the winding direction of electrode assembly 14. The laser welding is carried out as follows: In the state of electrode assembly 14 being pressed against the upper surface of second current-collector plate 52 such that band-like negative-electrode current-collector exposed part 41 is bent inward in the radial direction, laser light is applied to irradiate second current-collector plate 52 from the lower surface side thereof while moving the light source of the laser light in the radial direction. Further, bottom part 68 of outer case 16 is joined, by laser welding, to second current-collector plate 52, by applying laser light to irradiate bottom part 68 of outer case 16, from the undersurface side of the bottom. This causes negative electrode 12 of electrode assembly 14 to be electrically coupled to outer case 16 via second current-collector plate 52. The joining of negative-electrode current-collector exposed part 41 to second current-collector plate 52, allows a reduction in elongation of current collection paths in the longitudinal direction of negative electrode 12, resulting in a reduced electrical resistance of battery 10. Outer case 16 constitutes a negative-electrode terminal.

Outer case 16 accommodates electrode assembly 14 and the non-aqueous electrolyte, and includes crimping part 38, groove part 35, tubular part 30, and bottom part 68. Groove part 35 is formed by recessing, by spinning radially inward, a part of the outer side surface of tubular part 30 of outer case 16, for example, as follows: The part of the outer side surface is circularly recessed inward in the radial direction while a corresponding portion of the inner side surface of tubular part 30 protrudes in the radial direction. Sealing body 17 is disposed on groove part 35, and fixed to crimping part 38 of outer case 16 via gasket 28. When fixing sealing body 17 to outer case 16, crimping part 38 is formed by bending inward the upper end portion of outer case 16 toward peripheral edge portion 48 of sealing body 17.

Circular gasket 28 hermetically seals between outer case 16 and sealing body 17, thereby airtightly closing the internal space of battery 10. Gasket 28 is sandwiched by outer case 16 and sealing body 17, and insulates sealing body 17 from outer case 16. Gasket 28 has a role as a sealing material for keeping airtightness of the inside of the battery, and a role as an insulating material for insulating outer case 16 from sealing body 17. Note that gasket 28 may be provided with through hole 28a. The presence of through hole 28a facilitates flowing of the electrolyte inside battery 10, thereby resulting in an improved circulation of the electrolyte inside battery 10.

Battery 10 includes thin part 69 at bottom part 68 of outer case 16. Thin part 69 may be constituted by providing an engraved mark such as a circular or C-shaped mark on bottom part 68. Disposing thin part 69 at bottom part 68 allows bottom part 68 to smoothly break with thin part 69 as a starting point in the case of battery 10 abnormally heating. Therefore, when battery 10 abnormally heats, the high-temperature gases and molten material inside the battery can be smoothly discharged to the outside, resulting in improved safety of battery 10.

Battery 10 further includes annular metal plate 80 and circular insulating plate 81 composed of an insulating material. Metal plate 80 is joined to an outer surface on the opening side in the axial direction of outer case 16, more specifically, joined to the outer surface of crimping part 38. Metal plate 80 extends in a substantially radial direction. Metal plate 80 is electrically coupled to outer case 16 serving as the negative-electrode terminal, thereby constituting the negative-electrode terminal. Metal plate 80 is electrically coupled to a current-collector plate that connects a plurality of batteries (not shown) to each other in series or parallel through use of tongues (leads) of the current-collector plate. This causes the plurality of batteries 10 to be electrically coupled to each other via the current-collector plate.

Insulating plate 81 is interposed between metal plate 80 and sealing body 17, thereby insulating metal plate 80 from sealing body 17. Gasket 28 has projection 28b on the tip portion side thereof, extending in the radial direction from between crimping part 38 and sealing body 17. Insulating plate 81 has outer peripheral edge 81a on the outer side in the radial direction thereof, and outer peripheral edge portion 81a may be located on the upper side of projection 28b and may contact with gasket 28. In this way, gasket 28 is used to reliably insulate metal plate 80 from sealing body 17. In the present embodiment, insulating plate 81 includes flange part 82 and tubular part 83 that covers an outer peripheral surface of terminal part 19 located at the center portion in the radial direction of sealing body 17. Tubular part 83 is connected to the end portion on the inner side in the radial direction of flange part 82. Note that the battery does not necessarily need to include the metal plate and insulating plate described above.

Battery 10 is produced by the following steps, for example. Specifically, insulating plate 18 is disposed on electrode assembly 14, with positive-electrode leads 20 being passed through insulating plate 18. Then negative-electrode current-collector exposed part 41 of electrode assembly 14 is joined to second current-collector plate 52. Next, an assembly is formed, including electrode assembly 14, first current-collector plate 50, and second current-collector plate 52. Then the assembly is inserted into before-crimped outer case 16, with the second current-collector plate 52 side thereof first, followed by welding second current-collector plate 52 to bottom part 68. Next, groove part 35 is formed at tubular part 30, and second gasket 64 is disposed on the upper surface of the projection in the radial direction of tubular part 30, with the projection corresponding to groove part 35. After that, positive-electrode leads 20, first current-collector plate 50, and auxiliary current-collector plate 51 are joined to each other, and then an electrolyte solution is poured into outer case 16. Then terminal cap 27 is disposed on the upper side of first current-collector plate 50 such that the tip portion side of protrusion 61 of first current-collector plate 50 is accommodated in recess 71.

After that, first gasket 54 is disposed on the outer peripheral edge of terminal cap 27, followed by crimping them as described above to form crimping part 38, thereby sealing the opening of outer case 16. Then, for improving electrical conduction performance, laser light is applied to irradiate terminal cap 27 from the outside in the axial direction thereof, thereby laser welding between terminal cap 27 and first current-collector plate 50.

Specifically, recess 71 and protrusion 61 are welded to each other by laser welding as follows: The laser light is applied to irradiate terminal cap 27 from the outside on the upper side in the axial direction thereof, in a manner in which the laser light draws a circle that corresponds in radial position to a circle of the recess-mid line along the recess of circular recess 71. This laser welding provides good electrical continuity between terminal cap 27 and first current-collector plate 50. The accommodation of protrusion 61 in recess 71 facilitates ease of close contact between first current-collector plate 50 and terminal cap 27, resulting in reliable joining of first current-collector plate 50 to terminal cap 27 by laser welding.

Finally, on the upper side of terminal cap 27, circular insulating plate 81 and annular metal plate 80 are placed in this order, followed by joining crimping part 38 to metal plate 80 by laser welding or the like, thereby finishing battery 10. Note that, since first current-collector plate 50 includes circular step part 62 that extends downward in the axial direction from protrusion 61, it provides a gap in the axial direction between inner peripheral portion 63 and terminal cap 27. Therefore, positive-electrode lead 20 and auxiliary current-collector plate 51 can be disposed in the gap.

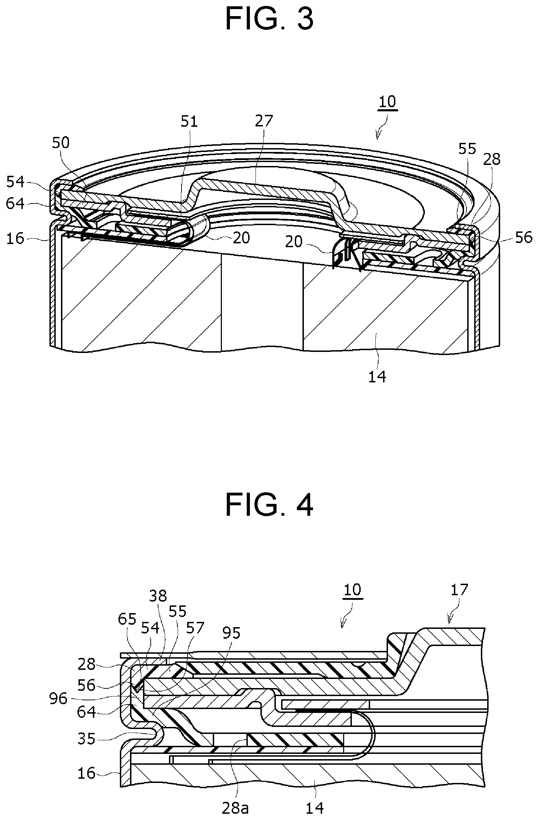

Next, the structure of gasket 28 will be described in detail. FIG. 3 is a perspective diagram illustrating an upper portion of battery 10, while being cut in a plane including the center axis. FIG. 4 is a half cross-sectional view in the axial direction of the upper portion of battery 10. As shown in FIGS. 3 and 4, gasket 28 includes circular first gasket 54, and circular second gasket 64 configured as a separate body from first gasket 54. Second gasket 64 is located closer to bottom part 68 in the axial direction than first gasket 54 is. First gasket 54 is interposed between crimping part 38 and sealing body 17. Second gasket 64 is interposed between groove part 35 and sealing body 17.

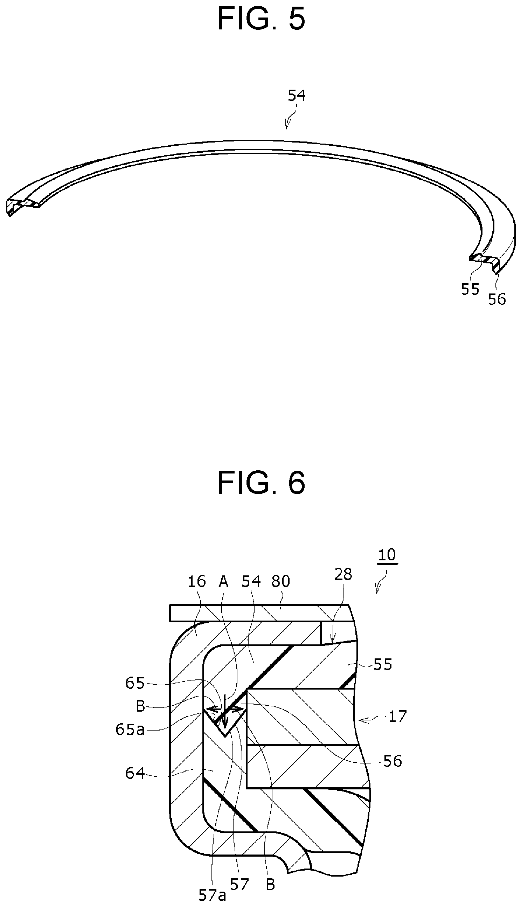

FIG. 5 is a perspective diagram illustrating first gasket 54 while being cut in a plane including the center axis. As shown in FIGS. 3 to 5, first gasket 54 includes first base part 55 that extends in the radial direction of outer case 16, and first wall part 56 that extends in the axial direction from the outer peripheral edge of first base part 55 toward the bottom part of outer case 16. As shown in FIGS. 4 and 5, first base part 55 includes the part that is interposed and sandwiched between crimping part 38 of outer case 16 and the upper surface of sealing body 17. First wall part 56 is interposed between the inner peripheral surface of outer case 16 and the outer peripheral surface of sealing body 17.

As shown in FIG. 4, second gasket 64 includes circular second base part 95 that is interposed between groove part 35 and sealing body 17 in the axial direction, and circular second wall part 96 that extends in the axial direction from the outer peripheral edge of second base part 95 toward crimping part 38. Second gasket 64 has second end surface 65 at the upper end of second wall part 96 of second gasket 64. Second end surface 65 abuts against first end surface 57 that is located at the lower end in the axial direction of first wall part 56 of first gasket 54. Second end surface 65 constitutes an upper end surface of second gasket 64. Second end surface 65 is located above groove part 35. Second wall part 96 is interposed between the inner peripheral surface of tubular part 30 and the outer peripheral surface of sealing body 17. Second base part 95 includes a sandwiched part that is sandwiched in the axial direction between the upper surface of groove part 35 and sealing body 17. Through hole 28a described above is formed in second base part 95 of second gasket 64.

FIG. 6 is an enlarged cross-sectional view of around mating surfaces, shown in FIG. 4, of first end surface 57 of first gasket 54 and second end surface 65 of second gasket 64. As shown in FIG. 6, second end surface 65 includes circular groove 65a that is recessed downward in the axial direction and has a V-shaped cross section in the axial direction. Further, first end surface 57 includes circular ridge part 57a having a V-shaped inclining surface that fits into groove 65a. In other words, the mating surfaces of first gasket 54 and second gasket 64 include a wedge-shaped mating-surface part.

Note that the description has been made regarding the configuration in which groove 65a described above is formed in second end surface 65, and in which ridge part 57a described above is formed in first end surface 57, with ridge part 57a fitting into groove 65a. Instead, however, the first end surface described above may be provided with a circular groove having a V-shaped cross section in the axial direction, while the second end surface described above may be provided with a circular ridge part having a V-shaped inclining surface, with the ridge part fitting into the groove described above.

Although each of first gasket 54 and second gasket 64 may be composed of any material with insulating properties, the materials of first gasket 54 and second gasket 64 may be selected from polypropylene (PP), polyamide (PA), polybutylene terephthalate (PBT), polyphenylene sulfide (PPS), perfluoroalkoxy alkane (PFA), etc. The materials may preferably be configured such that the material of first gasket 54 is composed of a resin with high heat resistance while the material of second gasket 64 is composed of an inexpensive resign with not so high heat resistance, which allows a good airtightness even at high temperatures and a reduced material cost of gasket 28. Conversely, the materials may also be configured such that second gasket 64 uses a material with high heat resistance while the first gasket uses an inexpensive material, which allows improved reliability under abnormal conditions occurring inside battery 10.

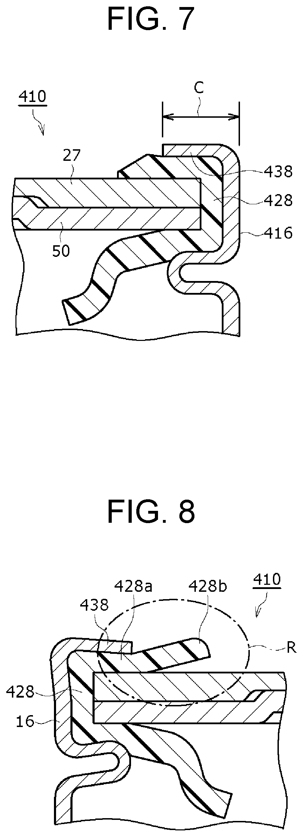

FIG. 7 is a cross-sectional view in the axial direction of a portion of battery 410 according to a reference example which differs from battery 10 in that gasket 428 is configured as a single, integrated part. Referring to FIG. 7, increasing the length, indicated by arrow C in FIG. 7, in the radial direction of crimping part 438 of outer case 416, allows an increased airtightness of battery 410. The increasing also facilitates ease of electrical coupling of crimping part 438 to annular metal plate 80 (see FIG. 1) when producing a battery module by electrically coupling a plurality of batteries 410 to each other using a current-collector plate not shown. The increased length in the radial direction of crimping part 438 makes it possible to restrain the displacement of sealing body 17 more strongly when the pressure inside outer case 416 rises than the corresponding short lengths of other crimping parts.

Unfortunately, the increased length in the radial direction of crimping part 438, increases the dimension in the axial direction of bent part 428a of gasket 428 as shown in FIG. 8, that is, a cross-sectional view in the axial direction of a portion of battery 410 for explaining the problem of battery 410. This, in turn, increases the difference in circumferential length of tip portion side 428b of bent part 428a between before and after bending of gasket 428, which may cause undulations in an inner region in the radial direction of gasket 428, as shown in region R in FIG. 8.

In contrast, battery 10 according to the present disclosure includes gasket 28 that includes circular first gasket 54 and circular second gasket 64 which is located on the lower side of circular first gasket 54 and is configured as a separate body from first gasket 54. Therefore, gasket 28 does not need to be bent inward in the peripheral direction when crimping the upper end portion of outer case 16. This can be achieved by configuring first gasket 54 as follows: That is, first gasket 54 located on the upper side is constituted by a plate material serving only as the first base part. Alternatively, as in the case of the embodiment described above, first gasket 54 is constituted by first base part 55 and first wall part 56, with first gasket 54 being formed in advance to have a substantially L-shaped cross section in the axial direction. For this reason, the difference in the circumferential length of the upper end portion of gasket 28 can be made to remain unchanged before and after the crimping. Therefore, it is possible to effectively reduce the occurrence of undulations in gasket 28 even when the length in the radial direction of crimping part 38 is increased to improve the airtightness. Therefore, battery 10 with high airtightness and excellent assembly tolerance can be produced.

Note that when first gasket 54 includes first base part 55, and first wall part 56 that extends from first base part 55 toward bottom part 68 of outer case 16 in the axial direction, first wall part 56 can be disposed between the outer peripheral edge of sealing body 17 and the inner peripheral surface of outer case 16. Therefore, compared to first gasket 54 without first wall part 56, the airtightness and insulation reliability between outer case 16 and sealing body 17 is improved.

Further, second gasket 64 includes second base part 95, and second wall part 96 that extends from second base part 95 toward crimping part 38 in the axial direction. Second wall part 96 is disposed between the outer peripheral edge of sealing body 17 and the inner peripheral surface of outer case 16. Therefore, compared to the second gasket without the second wall part, the airtightness and insulation reliability between outer case 16 and sealing body 17 is improved.

Moreover, first end surface 57 disposed at the lower end of first wall part 56 and
second end surface 65 disposed at the upper end of second wall part 96 abut against each other. Therefore, compared to the gasket providing a gap in the axial direction between the first wall part and the second wall part, the airtightness and insulation reliability between outer case 16 and sealing body 17 is improved.

Further, one of first end surface 57 and second end surface 65 includes circular groove 65a having a V-shaped cross section in the axial direction, while the other of first end surface 57 and second end surface 65 includes circular ridge part 57a having the V-shaped inclining surface that fits into circular, V-shaped groove 65a in the cross section described above. Therefore, since such a gasket includes the portion in which the mating surfaces do not extend in the radial direction, it allows a lengthened insulation distance leading to improved insulating properties, compared to a gasket in which the entire mating surfaces extend in the radial direction.

Further, in the cross section described above, there exist groove 65a and ridge part 57a. Therefore, when forming crimping part 38, a force is applied on first gasket 54 via crimping part 38 downward in the axial direction, it causes circular ridge part 57a having the V-shaped inclining surface to press circular, V-shaped groove 65a in the axial direction indicated by arrow A in FIG. 6. This in turn causes second gasket 64 having groove 65a to extend in the radial direction indicated arrows B in FIG. 6, which causes gasket 28 to increase the forces to press both outer case 16 and sealing body 17 in the radial direction, resulting in a further improved airtightness of battery 10.

Note that the present disclosure is not limited to the above-described embodiment and the modified examples thereof, and various improvements and modifications may be made within the scope and spirit of the present disclosure described in the claims, and equivalences thereof.

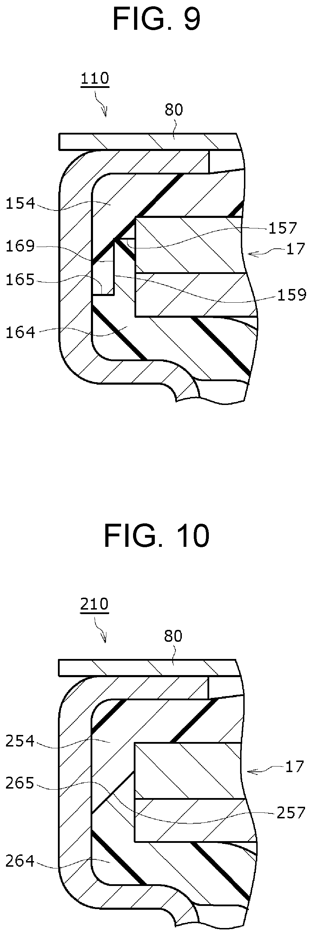

For example, in the embodiment described above, the description has been made regarding the configuration in which, in the cross section in the axial direction, there exist V-shaped groove 65a and ridge part 57a having the V-shaped inclining surface, at the mating surfaces of first gasket 54 and second gasket 64. However, as shown in FIG. 9, i.e., an enlarged cross-sectional view of battery 110 according to a first modified example, with the view of FIG. 9 corresponding to that of FIG. 6, the configuration may be as follows: Each of first end surface 157 of first gasket 154 and second end surface 165 of second gasket 164 has a crank shape in which two radially extending portions are connected to each other with an axially extending portion in the cross section in the axial direction, and the each includes a corresponding one of step parts 159 and 169 extending in the axial direction.

This configuration not only can make larger the insulation distance at the mating surfaces of first end surface 157 and second end surface 165, resulting in improved insulating properties, but also can take a labyrinth structure between first end surface 157 and second end surface 165, resulting in improved sealing performance and effectively reduced leakage of the electrolyte solution.

Alternatively, as shown in FIG. 10, i.e., an enlarged cross-sectional view of battery 210 according to a second modified example, with the view of FIG. 10 corresponding to that of FIG. 6, the configuration may be as follows: The mating surfaces of first gasket 254 and second gasket 264 may be inclining surfaces that incline relative to the radial direction, and each of first end surface 257 of first gasket 254 and second end surface 265 of second gasket 264 may be an inclining surface that inclines relative to the radial direction. Even in this case, since first end surface 257 and second end surface 265 include portions not extending in the radial direction, it can make larger the insulation distance at the mating surfaces of first end surface 257 and second end surface 265, resulting in improved insulating properties.

Note that, when both the first end surface and the second end surface include portions not extending in the radial direction and when the both abut against each other, the insulation distance can preferably be made longer, resulting in improved insulating properties. However, in the gasket according to the present disclosure, each of the first end surface and the second end surface may be constituted only by a surface extending in the radial direction.

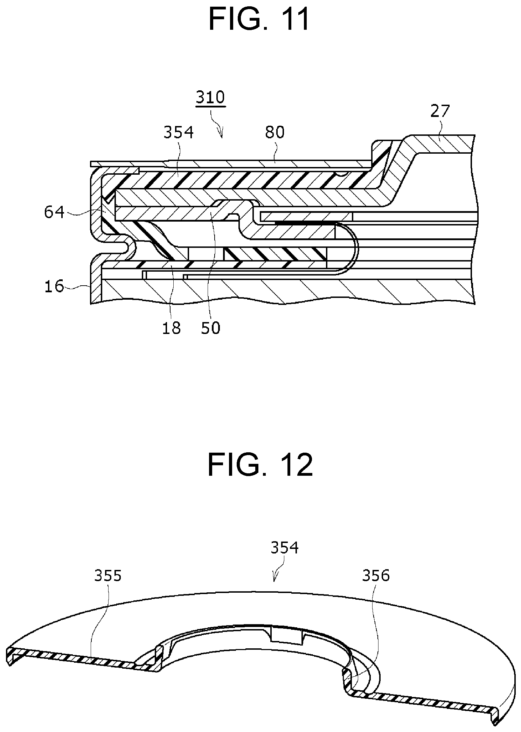

Moreover, as shown in FIG. 11, i.e., a half cross-sectional view in the axial direction of battery 310 according to a third modified example, with the view of FIG. 11 corresponding to that of FIG. 4, the configuration may be as follows: The first gasket may employ first gasket 354 having a configuration in which first gasket 54 shown in FIG. 4 and insulating plate 81 are integrated in a single body. Moreover, as shown in FIG. 12, i.e., a perspective diagram illustrating first gasket 354 while being cut in a plane including the center axis, the configuration may be as follows: First gasket 354 includes first base part 355 extending in the radial direction, and tubular part 356 covering the outer peripheral surface of terminal part 19 (see FIG. 1) located at the center portion in the radial direction of the sealing body 17.

In other words, as shown in FIG. 11, metal plate 80 may be disposed in contact with the outer surface on the opening side of the axial direction of outer case 16, and first gasket 354 may be interposed between metal plate 80 and sealing body 17, thereby insulating metal plate 80 from sealing body 17. This configuration makes it possible to eliminate the gap appearing between the mating surfaces of gasket 28 and insulating plate 81 in battery 10 according to the embodiment described above, resulting in further increased insulating properties while making battery 310 easier to assemble and handle.

Moreover, the description has been made regarding the configuration in which negative-electrode current-collector exposed part 41 is joined to the bottom of outer case 16 via second current-collector plate 52. Instead, however, the negative electrode of the electrode assembly may be electrically coupled to the outer case by joining one end portions of one or more negative electrode leads to the bottom surface inside the outer case, with the other end portions being joined to the current-collector exposed part of the negative-electrode. Alternatively, either in addition to or instead of the electrical coupling between the negative electrode and the outer case by using the negative-electrode leads, the negative electrode of the electrode assembly may be electrically coupled to the outer case by constituting the outermost peripheral surface of the electrode assembly by using the negative-electrode current collector, and causing the negative-electrode current collector to be in contact with the inner peripheral surface of the outer case.

Moreover, the description has been made regarding the configuration in which one end portions of a plurality of positive-electrode leads 20 are joined to sealing body 17, with the other end portions being joined to the positive-electrode current-collector exposed parts. Instead, however, the positive electrode may be electrically joined to the sealing body by joining one end of only one positive-electrode lead to the lower surface of the sealing body (the surface on the electrode assembly side of the sealing body), with the other end being joined to the positive-electrode current-collector exposed part. Alternatively, the configuration may be as follows: A positive-electrode current-collector exposed part is formed at one end portion in the width direction of the positive-electrode current collector. The positive-electrode current-collector exposed part extends in the longitudinal direction of the positive-electrode current collector, as in the case of the negative-electrode current-collector exposed part. A current-collector plate like the second current-collector plate may be disposed on the opening side of the outer case. Then the thus-disposed current-collector plate is joined to the positive-electrode current-collector exposed part.

Moreover, the descriptions have been made regarding the configuration in which the power storage devices according to the present disclosure are each battery 10, 110, 210, or 310. However, the electrode assembly of the power storage device may have a configuration in which the elongated positive electrode and the elongated negative electrode are wound via elongated insulating members such that the positive and negative electrodes face each other in the radial direction via the insulating members. Alternatively, the power storage device may be a capacitor.

### REFERENCE MARKS IN THE DRAWINGS

10, 110, 210, 310 battery (power storage device), 11 positive electrode, 12 negative electrode, 13 separator, 14 electrode assembly, 16 outer case, 17 sealing body, 18 insulating plate, 19 terminal part, 20 positive-electrode lead, 27 terminal cap, 28 gasket, 28a through hole, 28b projection, 30 tubular part, 35 groove part, 38 crimping part, 40 negative-electrode current collector, 41 negative-electrode current-collector exposed part, 42 negative-electrode material-mixture layers, 48 peripheral edge portion, 50 first current-collector plate, 50a insertion hole, 51 auxiliary current-collector plate, 52 second current-collector plate, 54, 154, 254, 354 first gasket, 55, 355 first base part, 56 first wall part, 57, 157, 257 first end surface, 57a ridge part, 60 outer peripheral portion, 61 protrusion, 62 step part, 63 inner peripheral portion, 64, 164, 264 second gasket, 65, 165, 265 second end surface, 65a groove, 68 bottom part, 69 thin part, 71 recess, 80 metal plate, 81 insulating plate, 81a outer peripheral edge portion, 82 flange part, 83 tubular part, 95 second base part, 96 second wall part, 159 step part, 356 tubular part.

## Claims

1. A power storage device, comprising:
an outer case including
a tubular part with a tubular shape including one end and the other end,
a bottom portion closing the one end of the tubular part, and
an opening disposed at the other end of the tubular part;
an electrode assembly disposed inside the outer case and including
a positive electrode, and
a negative electrode;
a sealing body sealing the opening of the outer case; and
a gasket with an insulating property disposed between the outer case and the sealing body,
wherein the gasket includes
a first gasket (54) with an annular shape, and
a second gasket (64) with an annular shape located closer to the bottom portion than the first gasket is in an axial direction.

2. The power storage device according to claim 1,
wherein the tubular part of the outer case includes
an outer peripheral surface, and
an inner peripheral surface, and a groove part (35) with an annular shape is disposed in and recessed in the outer peripheral surface, a portion of the inner peripheral surface protruding inward in a radial direction of the outer case, the portion of the inner peripheral surface corresponding to the groove part in the outer peripheral surface,
wherein the tubular part of the outer case includes an end portion at the opening of the tubular part, and a crimping part (38) is disposed at the opening and includes the end portion bent inward in the radial direction,
wherein the sealing body is disposed between the crimping part and the groove part,
wherein the first gasket is disposed between the crimping part and the sealing body, and
wherein the second gasket is disposed between the groove part and the sealing body.

3. The power storage device according to claim 2, wherein the first gasket includes
a first base part (55) with an annular shape disposed between the crimping part and the sealing body, the first base part extending in the radial direction, and
a first wall part (56) with an annular shape disposed between the sealing body and the outer case in the radial direction, the first wall part extending from the first base part toward the bottom portion.

4. The power storage device according to claim 3, wherein the second gasket includes
a second base part (95) with an annular shape disposed between the groove part and the sealing body, the second base part extending in the radial direction, and
a second wall part (96) with an annular shape disposed between the sealing body and the outer case in the radial direction, the second wall part extending from the second base part toward the opening.

5. The power storage device according to claim 4,
wherein the first wall part of the first gasket includes an end portion close to a second gasket, and the first wall part includes
a first end surface at the end portion of the first wall part,
wherein the second wall part of the second gasket includes an end portion close to a first gasket, and the second wall part includes
a second end surface at the end portion of the second wall part, and
wherein the first end surface and the second end surface abut each other.

6. The power storage device according to claim 5,
wherein one of the first end surface and the second end surface includes
a V-shaped groove in a cross section in the axial direction, and
wherein an other of the first end surface and the second end surface includes
a ridge part including
a V-shaped inclining surface fitting into the V-shaped groove in the cross section.

7. The power storage device according to claim 5, wherein each of the first end surface and the second end surface includes
a step part extending in the axial direction in the cross section in the axial direction.

8. The power storage device according to claim 5,
wherein the first end surface includes an inclining surface inclining in a direction,
wherein the second end surface includes an inclining surface inclining in a direction opposite to the direction in which the inclining surface of the first end surface inclines, and
wherein the inclining surface of the first end surface and the inclining surface of the second end surface abut each other.

9. The power storage device according to any one of claims 1 to 8,
wherein the outer case includes
an outer surface on an opening side in the axial direction, and
the power storage device further includes
a terminal plate joined to the outer surface, and
wherein the first gasket is disposed between the terminal plate and the sealing body.
